(19) Europäisches Patentamt

European Patent Office

Office européen des brevets

(11) **EP 3 016 387 A1**

(12) **EUROPEAN PATENT APPLICATION**

(43) Date of publication:
04.05.2016 Bulletin 2016/18

(51) Int Cl.:
*H04N 9/67* (2006.01)   *G09G 5/02* (2006.01)
*G06T 7/40* (2006.01)   *H04N 1/60* (2006.01)
*G03B 21/20* (2006.01)   *H04N 21/41* (2011.01)
*G06T 7/00* (2006.01)

(21) Application number: 14306726.2

(22) Date of filing: 29.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Bordes, Philippe
35576 CESSON SEVIGNE (FR)
• Lasserre, Sebastien
35576 CESSON SEVIGNE (FR)
• Andrivon, Pierre
35576 CESSON SEVIGNE (FR)

(74) Representative: Huchet, Anne
Technicolor
1-5 rue Jeanne d'Arc
92130 Issy-Les-Moulineaux (FR)

(54) **A method and device for estimating a color mapping between two different color-graded versions of a sequence of pictures**

(57) The present disclosure relates to a method and device for processing a sequence of pictures comprising estimating a color mapping between a first color-graded version of said sequence of pictures whose values are represented in a first color volume and a second color-graded version of said sequence of pictures whose values are represented in a second color volume. The method is characterized in that it comprises:
- obtaining (10) a first composite picture by assembling at least two pictures temporarily located at determined time instants in the first color-graded version of the sequence of pictures, and a second composite picture by assembling a same number of pictures temporarily located in the second color-graded version of the sequence of pictures at the same determined time instants; and
- estimating (20) said color mapping between said first and second color-graded versions of the picture by estimating a color mapping function that maps the color values of said first composite picture onto the color values of said second composite picture.

Fig. 1

**Description**

**1. Field**

The disclosure relates to the color mapping domain. In particular, it relates to a method for estimating a color mapping between a first color-graded version of a sequence of pictures and a second color-graded version of said sequence of pictures.

**2. Background**

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

In the following, a picture contains one or several arrays of samples (pixel values) in a specific picture/video format which specifies all information relative to the pixel values of a picture (or a video) and all information which may be used by a display and/or any other device to visualize and/or decode a picture (or video) for example. A picture comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A color gamut is a certain complete set of colors. The most common usage refers to a set of colors which can be accurately represented in a given circumstance, such as within a given color space or by a certain output device.

A color volume is defined by a color space and a dynamic range of the values represented in said color space.

For example, a color volume is defined by a RGB ITU-R Recommendation BT.2020 color space and the values represented in said RGB color space belong to a dynamic range from 0 to 4000 nits (candela per square meter). Another example of color volume is defined by a RGB BT.2020 color space and the values represented in said RGB color space belong to a dynamic range from 0 to 1000 nits.

Color-grading a picture (or a video) is a process of altering/enhancing the colors of the picture (or the video). Usually, color-grading a picture involves a change of the color volume (color space and/or dynamic range) or a change of the color gamut relative to this picture. Thus, two different color-graded versions of a same picture are versions of this picture whose values are represented in different color volumes (or color gamut) or versions of the picture whose at least one of their colors has been altered/enhanced according to different color grades. This may involve user interactions.

For example, in cinematographic production, a picture and a video are captured using tri-chromatic cameras into RGB color values composed of 3 components (Red, Green and Blue). The RGB color values depend on the tri-chromatic characteristics (color primaries) of the sensor. A first color-graded version of the captured picture is then obtained in order to get theatrical renders (using a specific theatrical grade). Typically, the values of the first color-graded version of the captured picture are represented according to a standardized YUV format such as BT.2020 which defines parameter values for Ultra-High Definition Television systems (UHDTV).

Then, a Colorist, usually in conjunction with a Director of Photography, performs a control on the color values of the first color-graded version of the captured picture by fine-tuning/tweaking some color values in order to instill an artistic intent.

A second color-graded version of the captured picture is also obtained to get home release renders (using specific home, Blu-Ray Disk/DVD grade). Typically, the values of the second color-graded version of the captured picture are represented according to a standardized YUV format such as ITU-R Recommendation BT.601 (Rec. 601) which defines studio encoding parameters of Standard Digital Television for standard 4:3 and wide-screen 16:9 aspect ratios, or ITU-R Recommendation BT.709 which defines parameter values for High Definition Television systems (HDTV).

Obtaining such a second color-graded version of the captured picture usually comprises stretching the color volume of the first color-graded version of the captured picture (for example RGB BT.2020 1000 nits modified by the Colorist) in order that the second color-graded version of the captured picture belong to a second color volume (RGB BT.709 1000 nits for example). This is an automatic step which uses a default color mapping function (for example for mapping of RGB BT.2020 format to RGB BT.709) usually approximated by a three dimensional look-up-table (also called 3D LUT). Note that all the considered YUV formats are characterized with the Color primaries parameters that allow defining any RGB-to-YUV and YUV-to-RGB color mappings.

Then, a Colorist, usually in conjunction with a Director of Photography, performs a control on the color values of the second color-graded version of the captured picture by fine-tuning/tweaking some color values in order to instill the artistic intent in the home release.

It is known to explicitly signal a default color mapping to a display, such as the YUV-to-RGB color mapping, so that the display is able to apply the appropriate default color mapping. Moreover, when the color mapping uses parameters calculated from a first and second color-graded version of a picture, it is known that those parameters are also signaled to the display so that the display is able to apply the appropriate default color mapping with appropriate parameters.

Using a default color mapping fails to preserve the artist intent because some colors, as specified by the colorist, in the second color-graded version of a picture may not be preserved when the default color mapping is applied on the first color-graded version of the picture.

For example, memory color such as flesh or skin tones, blue sky or green grass shades...etc, should be preserved when specified by the colorist for a given grade.

Estimating a color mapping between two color-graded versions of a same picture means estimating a color mapping function that optimally maps the color values of the first color-graded version of the picture onto the color values of the second color-graded version of said picture.

Following this reasoning, because a sequence of pictures is a set of temporally successive pictures, estimating a color mapping between two color-graded versions of a same sequence of pictures means estimating a color mapping function for each picture of the sequence of pictures, i.e. a color mapping function that optimally maps the color values of a picture temporally located at a determined time instant in the first color-graded version of the sequence of pictures onto the color values of a picture temporally located at the same time instant in the second color-graded version of the sequence of pictures.

However, this approach is time consuming and requires a long computing time. Moreover, noise or color non representative of the sequence of pictures may appear in the sequence of pictures with very similar pictures characteristics (distribution of colors, presence of objects...). This may involve temporal variations in the color mapping decisions over the time that may result in visual flickering (temporal instability of the look of consecutive pictures).

There is thus a need of a method for estimating a color mapping between two different color-graded versions of a sequence of pictures which reduces such computing cost and such flickering effect.

The specific nature of the disclosure as well as other objects, advantages, features and uses of the disclosure will become evident from the following description of embodiments taken in conjunction with the accompanying drawings.

## 3. Summary

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art with a method for processing a sequence of pictures comprising estimating a color mapping between a first color-graded version of said sequence of pictures whose values are represented in a first color volume and a second color-graded version of said sequence of pictures whose values are represented in a second color volume. The method is characterized in that it comprises:

- obtaining a first composite picture by assembling at least two pictures temporarily located at determined time instants in the first color-graded version of the sequence of pictures, and a second composite picture by assembling a same number of pictures temporarily located in the second color-graded version of the sequence of pictures at the same determined time instants; and

- estimating said color mapping between said first and second color-graded versions of the picture by estimating a color mapping function that maps the color values of said first composite picture onto the color values of said second composite picture.

The method allows getting a single color mapping for a sequence of pictures reducing thus the computing time required for estimating a color mapping for each picture of said sequence of pictures, and the visual flickering

Moreover, the size of the composite pictures may not be too large because the number of determined time instants controls the number of pictures used for obtaining the composite pictures.

According to an embodiment, the first composite picture is obtained by assembling at least two pictures of the first color-graded version of the sequence of pictures in order that the content of said first composite picture comprises at least a part of the content of each of said at least two pictures, and the second composite picture is obtained by assembling at least two pictures of the second color-graded version of the sequence of pictures in order that the content of said second composite picture comprises at least a part of the content of each of said at least two pictures.

According to an embodiment, the time instants $t_i$ are determined in order that the pictures $P_{i,ti}$ and $P_{2,ti}$ belongs to a same scene shot.

According to an embodiment, the method further comprises down-sampling the pictures located at the determined time instants in both the first and second color-graded version of the sequence of pictures before obtaining the first and second composite pictures.

According to an embodiment, an estimate of said color mapping function is obtained iteratively until a criterion is reached.

According to an embodiment, said color mapping function comprising two color transforms, wherein an estimate of said color mapping function is obtained at iteration k by:

  a) obtaining a third set of color values by applying a first color transform estimated at iteration (k-1) to the first set of color values;
  b) estimating a third color transform by mapping the second set of color values onto the third set of color values;
  c) obtaining a fourth set of color values by applying said third color transform to the second set of color values;
  d) estimating a first color transform by mapping the first set of color values onto said forth set of color values; said first color transform is used for updating the first color transform;
  e) obtaining a fifth set of color values by applying said first color transform to the first set of color values; and
  f) estimating a second color transform by mapping the fifth set of color values onto the second set of color values.

According to an embodiment, the color mapping function is approximated by a three-dimensional look-up-table.

According to an embodiment, said color mapping function comprising at least one color transform, said at least one color transform is approximated by a one-dimension piecewise linear function.

According to an embodiment, said color mapping function comprising at least one color transform, said at least one color transform is approximated by a one-dimensional look-up-table.

According to an embodiment, said color mapping function comprising at least one color transform, said at least one color transform is approximated by a linear matrix.

According to other of its aspects, the disclosure relates to a device comprising a processor configured for implementing the above method, a computer program product comprising program code instructions to execute the steps of the above method when this program is executed on a computer, a processor readable medium having stored therein instructions for causing a processor to perform at least the steps of the above method, and a non-transitory storage medium carrying instructions of program code for executing steps of the above method when said program is executed on a computing device.

## 4. Brief description of Drawings

In the drawings, an embodiment of the present disclosure is illustrated by the following figures:

- **Fig. 1** shows schematically a diagram of the steps of a method for estimating a color mapping between two color-graded versions of a sequence of pictures in accordance with a specific and non-limiting embodiment of the disclosure;
- **Fig. 2** schematically illustrates an embodiment of the step 20 for obtaining iteratively an estimate of the color mapping function;
- **Fig. 3** schematically illustrates an example of a color mapping function;
- **Fig. 4** schematically illustrates an example for estimating a color mapping function comprising two color transforms;
- **Fig. 5** schematically illustrates an example for estimating a color mapping function comprising three color transforms;
- **Fig. 6** schematically illustrates an example of a 3D LUT approximating a color mapping function;
- **Fig. 7** schematically illustrates a color mapping function comprising color transforms approximated by one-dimensional piecewise linear functions and a matrix;
- **Fig. 8** shows an example of a one-dimensional piecewise linear function **f**;
- **Fig. 9** shows an example of an architecture of a device in accordance with an embodiment of the disclosure.
- **Fig. 10** illustrates different assembling approaches for obtaining a composite picture;
- **Fig. 11** shows an example of a packing approach for obtaining a composite picture.

## 6. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

Estimating a color mapping between a first color-graded version of a sequence of pictures and a second color-graded version of said sequence of pictures may be a step of a method for processing a sequence of pictures.

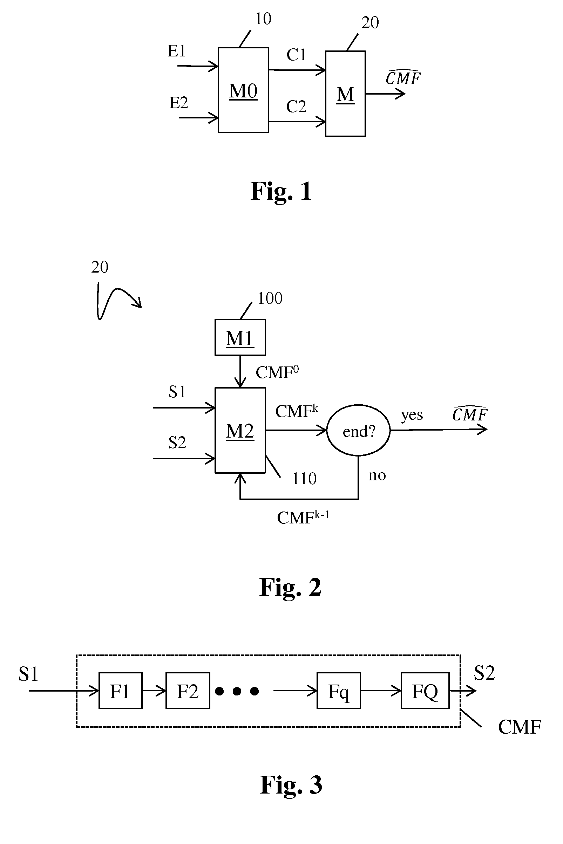

**Fig. 1** shows schematically a diagram of the steps of a method for estimating a color mapping CM between a first color-graded version E1 of a sequence of pictures whose values are represented in a first color volume and a second color-graded version E2 of said sequence of pictures whose values are represented in a second color volume according to a specific and non-limiting embodiment of the disclosure.

In step 10, a module M0 obtains a first composite picture C1 by assembling at least two pictures $P_{1,ti}$ temporarily located at determined time instants $t_i$ in the first color-graded version E1 of the sequence of pictures, and a second composite picture C2 by assembling a same number of pictures $P_{2,ti}$ temporarily located in the second color-graded version E2 of the sequence of pictures at the same determined time instants $t_i$.

According to an embodiment, the time instants $t_i$ are determined in order that the pictures $P_{1,ti}$ and $P_{2,ti}$ belongs to a same scene shot. For that, for example, a shot transition detector is applied to the sequence of pictures in order to get at least one scene shot comprising at least one picture, and a first (and second) composite picture is obtained from the pictures of each detected scene shot. A color mapping function is thus estimated from each first and second pictures.

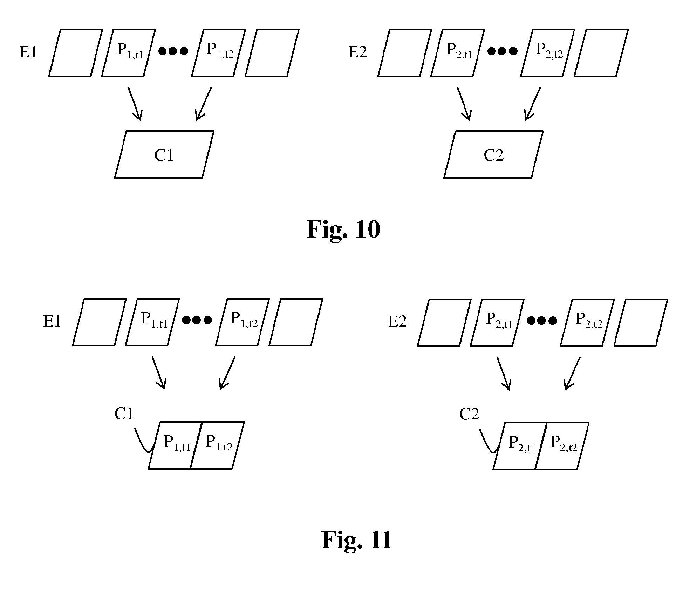

According to an embodiment, illustrated on **Fig. 10,** a composite picture C1, respectively C2, is obtained by any mosaicing (http://ieeexplore.ieee.org/xpls/ abs_all.jsp?arnumber=702214&tag=1), i.e. the composite picture C1, respectively C2, is a panoramic picture obtained from the pictures $P_{1,ti}$, respectively $P_{2,ti}$.

Thus, the content of said first composite picture C1, respectively C2, comprises at least a part of the content of each of said at least two pictures $P_{1,ti}$, respectively $P_{2,ti}$.

According to **Fig. 10,** the composite picture C1, respectively C2, is obtained from two pictures $P_{1,t1}$, respectively two pictures $P_{1,t2}$, temporally located at the time instants t1 and t2 in the first color-graded version E1, respectively the second color-graded version E2, of the sequence of pictures.

According to another embodiment, illustrated on **Fig. 11,** a composite picture C1, respectively C2, is obtained by packing the pictures $P_{1,ti}$, respectively $P_{2,ti}$ in said single picture C1, respectively C2.

Thus, the content of said first composite picture C1, respectively C2, comprises the content of each of said at least two pictures $P_{1,ti}$, respectively $P_{2,ti}$.

According to an embodiment of the step 10 on **Fig. 1,** the module M0 down-samples the pictures $P_{1,ti}$, respectively $P_{2,ti}$ located at the determined time instants $t_i$ in both the first E1 and second E2 color-graded versions of the sequence of pictures before obtaining the first C1 and second C2 composite pictures.

This allows reducing the resolution (number of columns and/or number of rows) of the composite picture C1 and C2 and thus reducing the computing time for estimating the color mapping. Moreover, down-sampling a picture reduces the noise of the picture and thus increases the quality of the color mapping function.

In step 20, a module M estimates said color mapping CM between said first and second color-graded versions of the picture by estimating a color mapping function CMF that maps the color values of said first composite picture C1 onto the color values of said second composite picture C2.

The color mapping function CMF is defined for mapping color values represented in the first color volume onto color values represented in the second color volume.

For example, only the dynamic ranges of the first and second color volume are different. The first color volume may be defined, for example, by using a RGB BT.2020 color space and the dynamic range of the values between 0 to 4000 nits (candela per square meter) and the second color volume is defined using a RGB BT.2020 color space and the dynamic range of the values between 0 to 1000 nits (candela per square meter).

According to another example, only the color gamuts of the first and second color volumes are different. The first color volume is defined, for example, by using a RGB BT.2020 color space and the dynamic range of the values between 0 to 1000 nits (candela per square meter) and the second color volume is defined using a RGB BT.709 color space and the dynamic range of the values between 0 to 1000 nits (candela per square meter).

According to another example, only the color spaces of the first and second color volumes are different. The first color volume is defined, for example, by using a RGB BT.2020 color space and the dynamic range of the values between 0 to 1000 nits (candela per square meter) and the second color volume is defined using a YUV BT.2020 color space and the dynamic range of the values between 0 to 1000 nits (candela per square meter).

The disclosure is not limited to these examples of color volumes and it is obvious that the first and second color volumes may be defined having more than one of these differences (color gamut, color space, dynamic range).

According to an embodiment of the disclosure, illustrated in **Fig. 3,** the color mapping function CMF comprises at least two color transforms F1, F2, $F_q$,... $F_Q$.

According to an embodiment of the step 20, illustrated on **Fig. 2,** in step 100, a module M1 obtains a first estimate CMF° of the color mapping function CMF, i.e. a first estimate $\widehat{F_q^0}$ for each color transform Fq according to the embodiment of the method illustrated in **Fig. 3.**

For convenience; in the following, the color values of the first component picture C1 is called a first set of color values S1 and the color values of the second component picture C2 is called a second set of color values S2.

According to an embodiment, the first estimate $\widehat{F_q^0}$ of each color transform is a linear monotonous function and, when a color transform is a linear matrix, the first estimate of the color transform is the identity matrix.

According to another example, the first estimates of the color transforms are color mapping functions that transform the color space of the first color volume to the color space of the second color volume. Such color transforms are defined, for example, by the standard SMPTE RP 177.

Next, in step 110, at an iteration **k** (**k** is an integer value), a module M2 obtains an estimate $\widehat{F_q^k}$ for each color transform Fq (an estimate CMF$^k$ of the color mapping function CMF) from the first S1 and the second S2 set of color values using an estimate $\widehat{F_q^{k-1}}$ for each color transform Fq (an estimate CMF $^{k-1}$ of the color mapping CMF) calculated previously (iteration **k-1**).

The step 110 is repeated until a criterion is reached. A final estimate $\widehat{F_q}$ for each color transform Fq ( $\widehat{CMF}$ of the color mapping function CMF) equals to the estimate $\widehat{F_q^p}$ for each color transform Fq (CMF$^p$ of the color mapping function CMF) with **p** (the last iteration) is thus obtained.

The criterion is reached for example when a maximum number of iterations **k** is reached or when the Euclidean distance between two successive estimates of the second color-graded version E2 of the picture, obtained by applying estimates CMF$^{k-1}$ and CMF$^k$ of the color mapping function CMF, calculated during two successive iterations, to the first color-graded version E1 of the picture, is below a predefined threshold.

Alternatively, the criterion is reached when the Euclidean distance between an estimate of the second color-graded version E2 of the picture obtained by applying an estimate CMF$^k$ of the color transform function CMF to the first color-graded version E1 of the picture and the second color-graded version E2 of the picture, is below a predefined threshold.

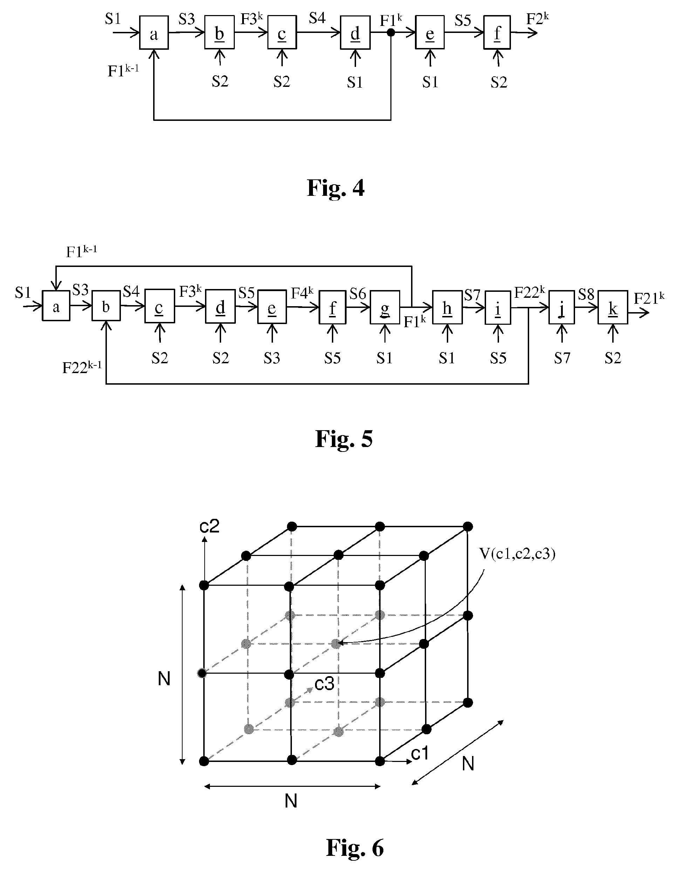

According to an embodiment of the disclosure, the color mapping function CMF comprises two color transforms F1 and F2 which are estimated from said the first S1 and the second S2 sets of color values by the method illustrated in **Fig. 4.**

Estimating the two color transforms F1 and F2 is an iterative process which comprises for each iteration k, k being an integer:

a) obtaining a third set of color values S3 by applying a first color transform $F1^{k-1}$ estimated at iteration (k-1) to the first set of color values S1;

b) estimating a third color transform $F3^{k}$ by mapping the second set of color values S2 onto the third set of color values S3;

c) obtaining a fourth set of color values S4 by applying said third color transform $F3^{k}$ to the second set of color values S2;

d) estimating a first color transform $F1^{k}$ by mapping the first set of color values S1 onto said fourth set of color values S4; said first color transform $F1^{k}$ is used for updating the first color transform $F1^{k-1}$;

e) obtaining a fifth set of color values S5 by applying said first color transform $F1^{k}$ to the first set of color values S1; and

f) estimating a second color transform $F2^{k}$ by mapping the fifth set of color values S5 onto the second set of color values S2.

The disclosure is not limited to a color mapping function CMF comprising two color transforms but extends to any color mapping comprising more than two color transforms.

For illustrative purpose, **Fig. 5** illustrates how a color mapping function CMF is estimated when it comprises three color transforms F1, F21 and F22. For each iteration k, k being an integer:

a) obtaining a third set of color values S3 by applying a first color transform $F1^{k-1}$, estimated at iteration (k-1), to the first set of color values S1;

b) obtaining a fourth set of color values S4 by applying the color transform $F22^{k-1}$, estimated at iteration (k-1), to the third set of color values S3;

c) estimating a third color transform $F3^{k}$ by mapping the second set of color values S2 onto the fourth set of color values S4;

d) obtaining a fifth set of color values S5 by applying said third color transform $F3^{k}$ to the second set of color values S2;

e) estimating a fourth color transform $F4^{k}$ by mapping the fifth set of color values S5 onto the third set of color values S3;

f) obtaining a sixth set of color values S6 by applying said forth color transform $F4^{k}$ to the fifth set of color values S5;

g) estimating a first color transform $F1^{k}$ by mapping the first set of color values S1 onto the sixth set of color values S6; said first color transform $F1^{k}$ is used for updating the first color transform $F1^{k-1}$;

h) obtaining a seventh set of color values S7 by applying said forth color transform $F1^{k}$ to the first set of color values S1;

i) estimating the color transform $F22^{k}$ by mapping the seventh set of color values S7 onto said fifth set of color values S5; said color transform $F22^{k}$ is used for updating the color transform $F22^{k-1}$;

j) obtaining a eighth set of color values S8 by applying said color transform $F22^{k}$ to the seventh set of color values S7; and

l) estimating the color transform $F21^{k}$ by mapping said eighth set of color values S8 onto the second set of color values S2.

It is not mandatory that the last step l) be executed at each iteration. This step shall be executed at least once, after the last iteration.

According to an embodiment, the step l) is executed at each iteration when, for example, the criterion (to stop or not the iterative method) requires the estimate of the color transform $F21^{k}$ at each iteration in order to evaluate a criterion to stop the iterative method described in relation with **Fig. 2.**

The principle for estimating the color mapping function CMF may be easily extended according to **Fig. 4** and **Fig. 5** to any color mapping function comprising any number of color transforms.

According to an embodiment of the method, the color mapping CMF is approximated by a three-dimensional look-up-table (3D LUT).

This allows few bits for representing the color mapping function CMF leading to reduced coding cost.

**Fig. 6** shows schematically an example of a 3D LUT approximating a specific color mapping function CMF.

The 3D LUT associates with at least one color value represented in a first color volume with a color value represented in a second color volume (different of the first color volume).

A 3D LUT allows for partitioning the first color volume into a set of regions delimited by the vertices of the 3D LUT. Exemplarily, a 3D LUT associates a set of color values with a triplet of color values in the first color volume. The set of color values can be a triplet of color values in the second color volume or a set of color values representative of the color transform (e.g. locally defined color mapping function parameters) used to transform color values in the first color volume into color values in the second color volume.

On **Fig. 6,** a square 3D LUT is represented as a lattice of NxNxN vertices. For each vertex V(c1,c2,c3) of the 3D LUT, a corresponding triplet of color values $(V_{c1}, V_{c2}, V_{c3})$ needs to be stored. The amount of data associated with the 3D LUT is NxNxNxK, where K is the amount of bits used to store one 3D LUT triplet value. The triplet value is for example a (R, G, B) triplet, a (Y, U, V) triplet or a (Y, Cb,Cr) triplet, etc.

According to an embodiment of the method, the color mapping function CMF comprising at least one color transform, said at least one color transform is approximated by a one-dimension piecewise linear function.

According to an embodiment of the method, the color mapping function CMF comprising at least one color transform, said at least one color transform is approximated by a one-dimensional look-up-table.

This embodiment is advantageous because approximating a color mapping function by a combination of existing one-dimensional non-linear mapping functions already implemented in many screen, displays and TV is possible. They could be used to implement any kind of color transform, e.g. in the case where the color grading is color space dependent.

According to an embodiment of the method, the color mapping function CMF comprises a color transform which is represented by a matrix.

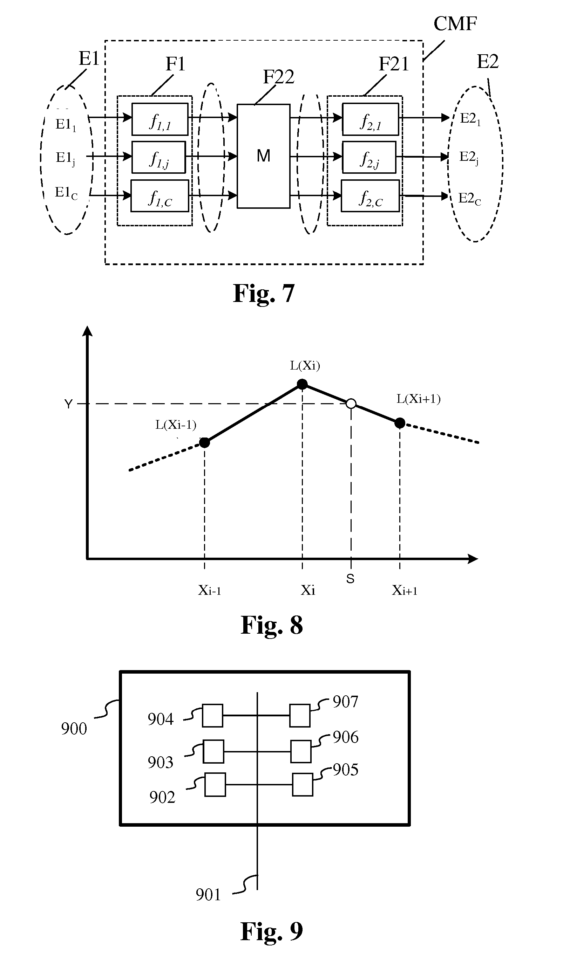

According to a non-limiting embodiment of the method, illustrated in **Fig. 7,** the color mapping function CMF comprises a color transform F1 which is approximated by C one-dimensional piecewise linear functions $f_{1,j}$ ($j \in \{1, ..., C\}$), a second color transform F21 which is approximated by C one-dimensional piecewise linear functions $f_{2,j}$ ($j \in \{1, ..., C\}$) and a linear matrix M (that may be considered as being another color transform F22). C is an integer number equals to the number of components of the picture. Usually C=3 as illustrated in **Fig. 7.**

The color transforms F1, F21 and F22 are then estimated as described in **Fig. 5** in which the third color transform $F3^k$ is also approximated by C one-dimensional piecewise linear functions $f_{3,j}$ ($j \in \{1, ..., C\}$) and the fourth color transform $F4^k$ is a matrix.

Each one-dimensional piecewise linear function $f_{1,j}$, $f_{2,j}$ or $f_{3,j}$ is estimated by mapping the **j** component of the color values belonging to an input set of color values, here E1$_j$, onto the **j** component of color values belonging to an output set of color values, here E2$_j$. For example relative to the **Fig. 5,** the input set of color values is the first set of color values S1 and the output set of color values is the sixth set of color values S6 when a one-dimensional piecewise linear function $f_{1,j}$ is estimated.

The disclosure is not limited by a specific method for estimating one-dimensional piecewise linear function by mapping a component of the color values belonging to an input set of color values onto a component of color values belonging to an output set of color values.

For example, the method of Cantoni et al. ("Optimal Curve Fitting With Piecewise Linear Functions," IEEE Transactions on Computers, Vol. C-20, No1, January 1971) as described in relation with **Fig. 8,** may be used.

**Fig. 8** shows an example of a one-dimensional piecewise linear function **f.**

A one-dimensional piece-wise linear function *f* is defined by intervals [$X_i$;$X_i$+1] and is linear in each interval. Note we consider here the case the intervals have equal range (equal to 1) for simplicity, but equivalent reasoning can apply to the general case (un-equal ranges). Then the values $X_i$ are considered as known.

For a given point with abscise $s \in [X_i;X_i+1]$, the corresponding image by *f* is *y* such as:

$$y = f(s) = L(X_i) + (L(X_i+1)-L(X_i))*(s-X_i)$$

One has to find the optimal values for the $L(X_i)$ for example by using a Least Square Minimization (LSM) method that minimizes the sum of the quadratic errors $Err(X_i) = (y_o - f(s_o))^2$ for the set of sample values $(s_o,y_o)$, with $s_o \in [X_i ; X_i+1]$ is a color values of the first set of color values S1 and $y_o$ is a color value of the second set of color values S2, for each interval $[X_i ; X_i+1]_{i=0...T}$. T is either a fixed integer value or a value to be optimized.

The Least Square Minimization (LSM) method consists in solving the set of equations of partial derivative of $Err(X_i)$ respectively to $L(X_i)_{i=0...T}$ equal to zero.

$$\frac{\partial \text{Err}}{\partial L_{X_i-1}} = \sum_m -2\big(y_m - f(s_m)\big)(-s_m + X_i) = 0 \text{ with } s_m \in [X_i\text{-}1 ; X_i] \qquad (1)$$

$$\frac{\partial \text{Err}}{\partial \text{L}_{X_i}} = \sum_m -2\big(y_m - f(s_m)\big)(s_m - X_i + 1) - \sum_o 2\big(y_o - f(s_o)\big)(1 - s_o + $$

$$X_i) = \quad \text{with } s_m \in [X_i\text{-}1 \text{ ; } X_i], s_o \in [X_i \text{ ; } X_i\text{+}1] \text{ (2)}$$

$$\frac{\partial \text{Err}}{\partial \text{L}_{X_{i+1}}} = \sum_o -2\big(y_o - f(s_o)\big)(s_o - X_i) = 0 \quad \text{with } s_o \in [X_i \text{ ; } X_i\text{+}1] \tag{3}$$

The value of L(Xi) determines the function *f* on both intervals *[X$_i$-1 ; X$_{ij}$* and *[X$_i$ ; X$_i$+ 1]:*

$$y = f(s_m) = L(X_i\text{-}1) + (L(X_i)\text{-}L(X_i\text{-}1))^*(s_m\text{-}X_i\text{+}1) \quad \text{if } s_m \in [X_{i\text{-}1} \text{ ; } X_i] \tag{4}$$

and

$$y = f(s_o) = L(X_i) + (L(X_i\text{+}1)\text{-}L(X_i))^*(s_o\text{-}X_i) \quad \text{if } s_o \in [X_i \text{ ; } X_i\text{+}1] \tag{5}$$

Once replacing *f(s$_m$)* and *f(s$_o$)* in equations (1-3) by their expressions given by equations (1) and (2), one obtains the following equations:

$$\begin{cases} Z_{i-1} = a_{i-1,i-1} \times L(X_i - 1) + a_{i-1,i} \times L(X_i) \\ Z_i = a_{i,i-1} \times L(X_i - 1) + a_{i,i} \times L(X_i) + a_{i,i+1} \times L(X_i + 1) \\ Z_{i+1} = a_{i+1,i} \times L(X_i) + a_{i+1,i+1} \times L(X_i + 1) \end{cases}$$

Applying the same reasoning for the other intervals, one obtains the following system:

$$\begin{pmatrix} Z_0 \\ \vdots \\ \vdots \\ \vdots \\ Z_N \end{pmatrix} = \begin{pmatrix} a_{0,0} & a_{0,1} & 0 & \cdots & & \cdots & 0 \\ a_{1,0} & a_{1,0} & a_{1,2} & 0 & & \ddots & \vdots \\ 0 & a_{2,1} & a_{2,2} & a_{2,3} & & 0 & \vdots \\ 0 & \ddots & & & & & 0 \\ \vdots & \ddots & 0 & a_{N-1,N-2} & a_{N-1,N-1} & a_{N-1,N} \\ 0 & \cdots & & \cdots & 0 & a_{N,N-1} & a_{N,N} \end{pmatrix} \begin{pmatrix} L(X_0) \\ \vdots \\ \vdots \\ \vdots \\ L(X_N) \end{pmatrix}$$

The disclosure is not limited by a specific method for estimating a matrix (M or the forth color transform F4$^k$) by mapping an input set of color values onto an output set of color values.

For example, when C equals 3 (three color components per color value), estimating a 3x3 matrix

$$\begin{pmatrix} g_{0,0} & g_{0,1} & g_{0,2} \\ g_{1,0} & g_{1,1} & g_{1,2} \\ g_{2,0} & g_{2,1} & g_{2,2} \end{pmatrix} \text{ by mapping an input set of color values } \begin{pmatrix} X_0 \\ X_1 \\ X_2 \end{pmatrix} \text{ onto an output set of color values } \begin{pmatrix} Y_0 \\ Y_1 \\ Y_2 \end{pmatrix}$$

comprises solving 3 linear systems of three equations each:

$$\begin{pmatrix} Y_0 \\ Y_1 \\ Y_2 \end{pmatrix} = M \begin{pmatrix} X_0 \\ X_1 \\ X_2 \end{pmatrix} \text{ with M} = \begin{pmatrix} g_{0,0} & g_{0,1} & g_{0,2} \\ g_{1,0} & g_{1,1} & g_{1,2} \\ g_{2,0} & g_{2,1} & g_{2,2} \end{pmatrix}$$

For a set of samples $((X_0, X_1, X_2), Y_i)$, a quadratic error is $Err_i = (Y_i - m_i(X_0, X_1, X_2))^2$ is calculated and a Least Mean Squares method then consists in solving a system of 9 equations built from the partial derivative of $mi()$ respectively to $g_{i,j}$ with i=0,1,2 and j=0,1,2.

On **Fig. 1-8** and **10-11,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

**Fig. 9** represents an exemplary architecture of a device 900 which may be configured to implement a method described in relation with **Fig. 1-8** and **10-11.**

Device 900 comprises following elements that are linked together by a data and address bus 901:

- a microprocessor 902 (or CPU), which is, for example, a DSP (or Digital Signal Processor);
- a ROM (or Read Only Memory) 903;
- a RAM (or Random Access Memory) 904;
- an I/O interface 905 for reception of data to transmit, from an application; and
- a battery 906

According to a variant, the battery 906 is external to the device. Each of these elements of **Fig. 9** are well-known by those skilled in the art and won't be disclosed further. In each of mentioned memory, the word « register » used in the specification can correspond to area of small capacity (some bits) or to very large area (e.g. a whole program or large amount of received or decoded data). ROM 903 comprises at least a program and parameters. Algorithm of the methods according to the disclosure is stored in the ROM 903. When switched on, the CPU 902 uploads the program in the RAM and executes the corresponding instructions.

RAM 904 comprises, in a register, the program executed by the CPU 902 and uploaded after switch on of the device 900, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of the method or device for estimating said color mapping between the first color-graded version E1 of picture and the second color-graded version E2 of said picture whose values are represented in a second color volume, the first E1 and/or second E2 color-graded version of the picture and/or the first C1 and/or second C2 composite pictures are obtained from a source. The determined time instants $t_i$ may also be obtained from a source. For example, the source belongs to a set comprising:

- a local memory (903 or 904), e.g. a video memory or a RAM (or Random Access Memory), a flash memory, a ROM (or Read Only Memory), a hard disk ;
- a storage interface (905), e.g. an interface with a mass storage, a RAM, a flash memory, a ROM, an optical disc or a magnetic support;
- a communication interface (907), e.g. a wireline interface (for example a bus interface, a wide area network interface, a local area network interface) or a wireless interface (such as a IEEE 802.11 interface or a Bluetooth® interface); and
- an picture capturing circuit (e.g. a sensor such as, for example, a CCD (or Charge-Coupled Device) or CMOS (or Complementary Metal-Oxide-Semiconductor)).

According to different embodiments, device 900 being configured to implement the method or device for estimating a color mapping described in relation with **Fig. 1-8** and **10-11,** belongs to a set comprising:

- a mobile device ;
- a communication device ;

- a game device ;
- a tablet (or tablet computer) ;
- a laptop ;
- a still picture camera;
- a video camera;
- an encoding chip;
- a still picture server; and
- a video server (e.g. a broadcast server, a video-on-demand server or a web server).
- a mobile device ;
- a communication device ;
- a game device;
- a set top box;
- a TV set;
- a tablet (or tablet computer) ;
- a laptop ;
- a display and
- a decoding chip.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or any other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1.  A method for processing a sequence of pictures comprising estimating a color mapping between a first color-graded version of said sequence of pictures whose values are represented in a first color volume and a second color-graded version of said sequence of pictures whose values are represented in a second color volume, **characterized in that** it comprises:

    - obtaining (10) a first composite picture by assembling at least two pictures temporarily located at determined time instants in the first color-graded version of the sequence of pictures, and a second composite picture by assembling a same number of pictures temporarily located in the second color-graded version of the sequence of pictures at the same determined time instants; and
    - estimating (20) said color mapping between said first and second color-graded versions of the picture by estimating a color mapping function that maps the color values of said first composite picture onto the color values of said second composite picture.

2.  The method of claim 1, wherein the first composite picture is obtained (10) by assembling at least two pictures of the first color-graded version of the sequence of pictures in order that the content of said first composite picture comprises at least a part of the content of each of said at least two pictures, and the second composite picture is obtained by assembling at least two pictures of the second color-graded version of the sequence of pictures in order that the content of said second composite picture comprises at least a part of the content of each of said at least two pictures.

3.  The method of claim 1 or 2, wherein the time instants $t_i$ are determined in order that the pictures $P_{1,ti}$ and $P_{2,ti}$ belongs to a same scene shot.

4.  The method of any one of claims 1 to 3, wherein the method further comprises down-sampling the pictures located at the determined time instants in both the first and second color-graded version of the sequence of pictures before obtaining the first and second composite pictures.

5.  A method of any one of the claims 1-4, wherein an estimate of said color mapping function (20) is obtained iteratively until a criterion is reached.

6.  The method of the claim 5, wherein said color mapping function comprising two color transforms, wherein an estimate of said color mapping function is obtained at iteration k by:

    a) obtaining a third set of color values (S3) by applying a first color transform ($F1^{k-1}$) estimated at iteration k-1 to the first set of color values (S1);
    b) estimating a third color transform ($F3^k$) by mapping the second set of color values (S2) onto the third set of color values (S3);
    c) obtaining a fourth set of color values (S4) by applying said third color transform ($F3^k$) to the second set of color values (S2);
    d) estimating a first color transform ($F1^k$) by mapping the first set of color values (S1) onto said forth set of color values (S4); said first color transform ($F1^k$) is used for updating the first color transform ($F1^{k-1}$);
    e) obtaining a fifth set of color values (S5) by applying said first color transform ($F1^k$) to the first set of color values (S1); and
    f) estimating a second color transform ($F2^k$) by mapping the fifth set of color values (S5) onto the second set of color values.

7.  The method of any one of the claims 1-6, wherein the color mapping function is approximated by a three-dimensional look-up-table.

8.  The method of any one of the claims 1-7, wherein said color mapping function comprising at least one color transform, said at least one color transform is approximated by a one-dimension piecewise linear function.

9.  The method of any one of the claims 1-8, wherein said color mapping function comprising at least one color transform, said at least one color transform is approximated by a one-dimensional look-up-table.

10. The method of any one of the claims 1-9, wherein said color mapping function comprising at least one color transform, said at least one color transform is approximated by a linear matrix.

11. A Device for processing a sequence of pictures comprising a processor configured for estimating a color mapping between a first color-graded version of said sequence of pictures whose values are represented in a first color volume and a second color-graded version of said sequence of pictures whose values are represented in a second color volume, **characterized in that** the processor is further configured for:

   - obtaining (10) a first composite picture by assembling at least two pictures temporarily located at determined time instants in the first color-graded version of the sequence of pictures, and a second composite picture by assembling a same number of pictures temporarily located in the second color-graded version of the sequence of pictures at the same determined time instants; and
   - estimating (20) said color mapping between said first and second color-graded versions of the picture by estimating a color mapping function that maps the color values of said first composite picture onto the color values of said second composite picture.

12. A computer program product comprising program code instructions to execute the steps of the method of any one of claims 1-10 when this program is executed on a computer.

13. A processor readable medium having stored therein instructions for causing a processor to perform at least the steps of the method of any one claims 1-10.

14. Non-transitory storage medium carrying instructions of program code for executing steps of the method of any one claims 1-10, when said program is executed on a computing device.

**Fig. 1**

**Fig. 2**

**Fig. 3**

**Fig. 4**

**Fig. 5**

**Fig. 6**

**Fig. 7**

**Fig. 8**

**Fig. 9**

EP 3 016 387 A1

E1 ⟋⟋ P<sub>1,t1</sub> ●●● P<sub>1,t2</sub> ⟋⟋          E2 ⟋⟋ P<sub>2,t1</sub> ●●● P<sub>2,t2</sub> ⟋⟋

C1

C2

**Fig. 10**

E1 ⟋⟋ P<sub>1,t1</sub> ●●● P<sub>1,t2</sub> ⟋⟋          E2 ⟋⟋ P<sub>2,t1</sub> ●●● P<sub>2,t2</sub> ⟋⟋

C1  P<sub>1,t1</sub> P<sub>1,t2</sub>          C2  P<sub>2,t1</sub> P<sub>2,t2</sub>

**Fig. 11**

17

Europäisches
Patentamt

European
Patent Office

Office européen
des brevets

# EUROPEAN SEARCH REPORT

Application Number

EP 14 30 6726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUNGBAE HWANG ET AL: "Color Transfer Using Probabilistic Moving Least Squares", 2014 IEEE CONFERENCE ON COMPUTER VISION AND PATTERN RECOGNITION, 1 June 2014 (2014-06-01), pages 3342-3349, XP055186783, DOI: 10.1109/CVPR.2014.427 ISBN: 978-1-47-995118-5 * abstract * * figure 1 * * 1. Introduction * * 3.1. Moving least squares framework * * 3.2. Probabilistic Modeling of the Color Transfer * ----- | 1-14 | INV. H04N9/67 G09G5/02 G06T7/40 H04N1/60 G03B21/20 H04N21/41 G06T7/00 |
| A | US 2013/002810 A1 (STAUDER JUERGEN [FR] ET AL) 3 January 2013 (2013-01-03) * paragraph [0002] * * paragraph [0044] * * paragraph [0047] - paragraph [0049] * * paragraph [0056] - paragraph [0063] * * paragraph [0126] - paragraph [0131] * ----- | 1-14 | |
| A | US 2012/070082 A1 (TIN SIU-KEI [US]) 22 March 2012 (2012-03-22) * paragraph [0003] - paragraph [0004] * * paragraph [0039] - paragraph [0041] * * paragraph [0060] - paragraph [0061] * ----- | 1-14 | TECHNICAL FIELDS SEARCHED (IPC) H04N G09G G06T G03B |
| A | WO 2013/009651 A1 (DOLBY LAB LICENSING CORP) 17 January 2013 (2013-01-17) * paragraph [0008] - paragraph [0009] * * paragraph [0032] - paragraph [0036] * * paragraph [0054] - paragraph [0059] * * paragraph [0069] - paragraph [0071] * ----- | 1-14 | |

The present search report has been drawn up for all claims

| Place of search | Date of completion of the search | Examiner |
|---|---|---|
| The Hague | 28 May 2015 | Lim, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 016 387 A1**

## ANNEX TO THE EUROPEAN SEARCH REPORT
## ON EUROPEAN PATENT APPLICATION NO.

EP 14 30 6726

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2015

| Patent document cited in search report | | Publication date | Patent family member(s) | | Publication date |
|---|---|---|---|---|---|
| US 2013002810 | A1 | 03-01-2013 | NONE | | |
| US 2012070082 | A1 | 22-03-2012 | US 2012070082 A1 | | 22-03-2012 |
| | | | WO 2012040162 A1 | | 29-03-2012 |
| WO 2013009651 | A1 | 17-01-2013 | CN 103688287 A | | 26-03-2014 |
| | | | US 2014160143 A1 | | 12-06-2014 |
| | | | WO 2013009651 A1 | | 17-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CANTONI et al.** Optimal Curve Fitting With Piecewise Linear Functions. *IEEE Transactions on Computers,* January 1971, vol. C-20 (1